# EUROPÄISCHE PATENTSCHRIFT

(11) **EP 4 429 840 B1**
(45) Veröffentlichungstag und Bekanntmachung des Hinweises auf die Patenterteilung: **10.12.2025**
(21) Anmeldenummer: 22809051.0
(22) Anmeldetag: 24.10.2022
(51) Int. Cl.: B23K 1/008

(54) **TRANSPORTSYSTEM ZUM TRANSPORTIEREN VON LÖTGUT DURCH EINE LÖTANLAGE UND LÖTANLAGE**
TRANSPORT SYSTEM FOR TRANSPORTING ITEMS TO BE SOLDERED THROUGH A SOLDERING SYSTEM, AND SOLDERING SYSTEM
SYSTÈME DE TRANSPORT DESTINÉ À TRANSPORTER DES PIÈCES FAISANT OFFICE DE SUPPORTS DE BRASAGE À TRAVERS UNE INSTALLATION DE BRASAGE ET INSTALLATION DE BRASAGE

(30) Priorität: 09.11.2021 DE 102021129079
(43) Veröffentlichungstag der Anmeldung: 18.09.2024
(73) Patentinhaber: Ersa GmbH, 97877 Wertheim (DE)
(72) Erfinder: HOFMANN, Uwe, 97078 Würzburg (DE); ENDRESS, Lothar, 97877 Wertheim (DE)
(74) Vertreter: DREISS Patentanwälte PartG mbB
(86) Internationale Anmeldenummer: PCT/EP2022/079550
(87) Internationale Veröffentlichungsnummer: WO 2023/083592

(56) Entgegenhaltungen:
- DE-A1- 102005 055 283
- US-A- 6 032 788

## Beschreibung

Die Erfindung betrifft ein Transportsystem zum Transportieren von Lötgut durch eine Lötanlage mit wenigstens einer sich in Transportrichtung erstreckenden Transportspur, wobei die Transportspur wenigstens zwei Transportschienen umfasst. Das Lötgut kann als mit elektronischen Bauteilen bestückte Leiterplatte oder als Warenträger für Waren, und insbesondere für mit elektronischen Bauteilen bestückten Leiterplatten, ausgebildet sein. Die Lötanlage kann insbesondere eine Reflowlötanlage zum Durchlauflöten von mit elektronischen Bauteilen bestückten Leiterplatten oder eine Trocknungsanlage zum Trocknen von bestückten Leiterplatten sein.

Solche Transportsysteme greifen das jeweilige Lötgut in der Regel an den parallel zur Transportrichtung verlaufenden Rändern und fördern es mittels Transportschienen, in denen beispielsweise Kettenförderer laufen, in Transportrichtung. Die Transportschienen können eine Länge von mehreren Metern aufweisen und aus mehreren Schienenabschnitten zusammengesetzt sein. Solche Transportschienen werden auch als Transportholme bezeichnet. Ferner ist es bekannt, neben den beiden äußeren Transportschienen, die das Lötgut an den Rändern stützen, eine weitere Transportschiene für eine Mittenunterstützung vorzusehen, die das Lötgut im mittleren Bereich unterstützt. Mittenunterstützungen sind insbesondere dann vorteilhaft, wenn vergleichsweise große Leiterplatten oder Warenträger verlötet oder getrocknet werden. Sie verhindern ein Durchbiegen oder Durchhängen des Lötguts im mittleren Bereich, wozu es insbesondere aufgrund der Erhitzung des Lötguts kommen kann, und gewährleisten dadurch einen funktionssicheren Transport.

Die Erfindung betrifft auch eine Lötanlage, insbesondere eine Reflowlötanlage zum Durchlauflöten von bestückten Leiterplatten oder eine Trocknungsanlage zum Trocknen von bestückten Leiterplatten, in der Lötgut entlang einer Transportrichtung transportierbar ist.

Mittels Reflowlötanlagen werden sogenannte SMD-Bauteile (Surface Mounted Devices) mittels Lotpaste auf die Oberfläche von Leiterplatten aufgelötet. Die Lotpaste, die insbesondere eine Mischung aus Lotmetallgranulat, Flussmittel und pastösen Bestandteilen ist, wird zum Reflowlöten auf die Oberfläche der Leiterplatten aufgetragen oder aufgedruckt. Anschließend werden die zu lötenden Bauteile in die Lotpaste gesetzt. Im Reflowlötprozess wird das Lötgut, also die Baugruppe bestehend aus Leiterplatte, Lotpaste und zu verlötenden Bauteilen, entlang des Prozesskanals in einer Vorheizzone vorgewärmt und in einer Lötzone auf eine Temperatur aufgeheizt, welche oberhalb des Schmelzpunktes der Lotpaste liegt. Dadurch schmilzt die Lotpaste und die Lötstellen bilden sich aus. In einer Kühlzone - falls eine solche vorhanden ist - wird das Lötgut abgekühlt, bis das aufgeschmolzene Lot erstarrt, bevor es aus der Reflowlötanlage entnommen wird.

Bei Reflowlötanlagen wird der Prozesskanal in der Regel von zwei Kanalhälften, einer oberen und einer unteren Kanalhälfte gebildet. Die untere Kanalhälfte ist in oder an einem Grundkörper und die obere Kanalhälfte ist in oder an einer Abdeckhaube vorgesehen. Im oder am Prozesskanal bzw. in oder am Grundkörper und in oder an der Abdeckhaube sind in der Regel weitere Bauelemente vorgesehen, wie beispielsweise Düsenplatten, Lüftereinheiten, das Prozessgas führende Luftkanäle, Filterelemente und/oder Kühlelemente. Insgesamt wird damit entlang der Transportrichtung im Prozesskanal ein gewünschtes Temperaturprofil bereitgestellt, wobei das Prozessgas in den Prozesskanal eingeblasen, aus diesem abgesaugt, insbesondere in der Kühlzone gekühlt, gereinigt und dem Prozesskanal wieder zugeführt wird. Aus der DE 10 2019 128 780 A1 und der DE 10 2005 055 283 A1 sind Lötanlage mit Transporteinheiten zum Transportieren von Lötgut bekannt. Ferner ist es aus der DE 10 2019 125 981 A1 bekannt, ein Transportsystem zum Transportieren von Lötgut durch eine Lötanlage mit zwei parallel zueinander verlaufenden, sich in Transportrichtung erstreckende Transportspuren vorzusehen, wobei jede der Transportspuren wenigstens zwei parallel zueinander verlaufende und sich in Transportrichtung erstreckende Transportschienen umfasst. Um unterschiedlich großes und insbesondere unterschiedlich breites Lötgut aufnehmen zu können, ist ebenfalls bekannt, dass die Transportspuren quer zur Transportrichtung breitenverstellbar ausgebildet sind.

Aus der US 6 032 788 A ist ein Mehrschienen-Transportsystem zum Transportieren von Leiterplatten entlang benachbarter Schienenpaare mit ersten und zweiten Bremsstangen mit parallelen Längsachsen und eine Vielzahl von Bremszylindern bekannt.

Aus der US 6 032 788 A und der DE 10 2005 055283 A1 sind Transportsysteme mit verstellbaren Mittenunterstützungen bekannt.

Es hat sich gezeigt, dass gerade dann, wenn die Transportspuren vergleichsweise lang sind, eine Einstellung der Parallelität der Transportschienen über deren Längserstreckung nicht ohne weiteres möglich ist. Erschwert wird eine Einstellung der Parallelität der Transportschienen insbesondere auch dann, wenn diese zum Transportieren von unterschiedlich breitem Lötgut breitenverstellbar ausgebildet sind.

Der Erfindung liegt die Aufgabe zugrunde, ein Transportsystem zum Transportieren von Lötgut durch eine Lötanlage sowie eine Lötanlage mit einem Transportsystem bereitzustellen, bei denen eine Einstellung der Parallelität der einzelnen Transportschienen auf möglichst einfache Art und Weise funktionssicher möglich ist.

Diese Aufgabe wird gelöst durch ein Transportsystem mit den Merkmalen des Anspruchs 1. Folglich ist insbesondere vorgesehen, dass an wenigstens einer Transportschiene mehrere Koppelelemente vorgesehen sind, wobei die Koppelelemente Führungselemente umfassen, die mit Querstangen, die sich in quer zur Transportrichtung verlaufender Querrichtung erstrecken, zusammenwirken, und wobei die Koppelelemente jeweils ein das jeweilige Führungselement aufweisendes Führungsteil und ein an der jeweiligen Transportschiene befestigtes Befestigungsteil umfassen. Die Ausbildung ist dabei derart, dass das Befestigungsteil gegenüber dem Führungsteil verstellbar ist, so dass sich der Abstand in Querrichtung zwischen der Transportschiene und dem jeweiligen Führungsteil ändert.

Dadurch, dass die Koppelteile jeweils zwei zueinander verstellbare und aneinander fixierbare Bauteile umfassen, nämlich das Führungsteil und das Befestigungsteil, ist es auf einfache Art und Weise möglich, die einzelnen Transportschienen im Bereich des jeweiligen Führungsteils in Querrichtung zu verstellen. Ein solches Verstellen des jeweiligen Befestigungsteils und damit des zugehörigen Führungsteils in Querrichtung kann bei allen Koppelelementen solange erfolgen, bis die jeweilige Transportschiene in Längsrichtung optimal ausgerichtet ist. Der Verstellung der Führungsteile bzw. Befestigungsteile sind diese dann vorzugsweise zu fixieren. Insgesamt können dadurch auch sehr lange Transportschienen, die sich über fünf, zehn oder mehr Meter erstrecken können, vergleichsweise einfach ausgerichtet werden.

Der Vorgang muss zumindest beim Aufbau bzw. der Einrichtung des Transportsystems vorgenommen werden. Sollte sich durch den Betrieb des Transportsystems eine Transportschiene an einer oder mehreren Stellen in Längsausrichtung verstellen, so kann dies durch entsprechendes Rückverstellen bzw. Neueinstellen des Befestigungsteils und damit des Führungsteils auf einfache Art und Weise behoben werden.

Bei der wenigstens einen, einzustellenden Transportschiene kann es sich um eine Transportschiene handeln, die das Lötgut an dessen Rändern stützt oder auch um eine Transportschiene, die zur Mittenunterstützung dient.

Ferner ist vorgesehen, dass die Befestigungsteile an der jeweiligen Transportschiene axial verstellbar und fixierbar angeordnet sind und wenn die Befestigungsteile jeweils einen Stellabschnitt und die Führungsteile jeweils einen mit dem zugehörigen Stellabschnitt zusammenwirkenden Gegenabschnitt aufweisen. Dabei schließen der Stellabschnitt und/oder der Gegenabschnitt mit der Transportrichtung einen spitzen Winkel ein, so dass sich der Abstand in Querrichtung zwischen der Transportschiene und dem jeweiligen Führungsteil bei axialer Verstellung des Befestigungsteils ändert. Die Anordnung ist insbesondere so, dass die Querstangen ortsfest angeordnet sind. Durch ein axiales Verstellen des Befestigungsteils an der jeweiligen Transportschiene wird folglich die Transportschiene im Bereich des Befestigungsteils in Querrichtung verstellt. Dabei wird die axiale Bewegung des Befestigungselements aufgrund des spitzen Winkels, den der Stellabschnitt bzw. der Gegenabschnitt mit der Transportrichtung einstellt, in eine Querbewegung überführt. Je nach Größe des spitzen Winkels ändert sich folglich das Übersetzungsverhältnis von Axialbewegung des Befestigungselements zu Verstellung der Schiene im Bereich des jeweiligen Befestigungselements in Querrichtung. Folglich wird lediglich das jeweilige Befestigungsteile aktiv verstellt; die Verstellung des zugehörigen Führungsteils erfolgt automatisch.

Dabei ist vorteilhaft, wenn der jeweilige Stellabschnitt wenigstens abschnittsweise flächig am jeweiligen Gegenabschnitt verschiebbar geführt anliegt.

Ferner ist es vorteilhaft, wenn der jeweilige Stellabschnitt oder der jeweilige Gegenabschnitt eine Schiebeaufnahme für den jeweiligen Schiebeabschnitt oder den jeweiligen Stellabschnitt aufweist. Die Schiebeaufnahme kann insbesondere nutartig ausgebildet sein. Die Schiebeaufnahme kann auch eine Hinterschneidungen aufweisen und/oder schwalbenschwanzartig ausgebildet sein, um eine geeignete Bewegungskopplung zwischen dem jeweiligen Bewegungsgeld und dem zugehörigen Führungsteil zu erreichen.

Ferner ist denkbar, dass der jeweilige Stellabschnitt oder der jeweilige Gegenabschnitt ein sich in Transportrichtung erstreckendes Langloch aufweist, das in Längsrichtung des Langlochs randoffen oder randgeschlossen sein kann. In dem jeweiligen Langloch ist vorteilhafterweise ein Fixierelement zur Fixierung des jeweiligen Führungsteils am jeweiligen Befestigungsteil, nach entsprechender Verstellung des Befestigungsteils in Axialrichtung, vorgesehen. Das Befestigungsteil ist insbesondere derart ausgebildet, dass es in einer Freigabelage ein Verstellen des Befestigungsteils in Axialrichtung ermöglicht und dass es in einer Fixierlage, dann, wenn die jeweilige Transportschiene in Längsrichtung ausgerichtet ist, das jeweilige Führungsteil am Befestigungsteil fixiert.

Das Fixierelement kann insbesondere als Befestigungsschraube ausgebildet sein. Eine derartige Schraube kann ein Gewinde aufweisen, das in das Führungsteil oder Befestigungsteil einschraubbar ist. Die Befestigungsschraube kann auch einen Schraubenkopf aufweisen, der in der Fixierlage das Befestigungsteil gegen das Führungsteil beaufschlagt.

Ferner ist vorteilhaft, wenn zur Breitenverstellung der wenigstens einen Transportspur wenigstens eine der Breitentransportschienen in quer zur Transportrichtung verlaufender Querrichtung verstellbar ist, wobei in Querrichtung benachbarte Führungselemente in Querrichtung verstellbarer Transportschienen jeweils an derselben Querstange in Querrichtung aufeinander zu und voneinander weg verlagerbar geführt sind. Dadurch kann eine Transportschiene parallel zu den anderen Transportschienen auf einfache Art und Weise über ihre gesamte Länge parallel zu den anderen Transportschienen verstellt werden.

Gemäß einer Ausführungsform der Erfindung ist vorgesehen, dass insbesondere zwischen den Transportschienen und zu den Querstangen parallel zu den Transportschienen verlaufende, drehantreibbare Drehstangen vorgesehen sind, dass die Koppelelemente jeweils eine Drehaufnahme für die jeweilige Drehstange aufweisen und dass die Querstangen auf ihrer der jeweiligen Transportschiene zugewandten Seite eine Verzahnung aufweisen, die an den jeweiligen Drehstangen vorgesehene Zahnräder kämmt. Durch Verdrehen der einzelnen Drehstangen können folglich die zugehörigen Transportschienen in Querrichtung verlagert werden. Um eine gleichmäßige Verlagerung über die gesamte Länge der Transportschienen zu erreichen, weisen die Querschienen eine Verzahnung auf, welche an den Drehstangen vorgesehene Zahnräder kämmt. Wird also die jeweilige Drehstange verdreht, so wird gewährleistet, dass die zugehörige Transportstange parallel zur Transportrichtung über ihre gesamte Länge gleichmäßig verstellt wird. Die jeweilige Transportschiene wird durch die jeweils zugehörigen Koppelelemente bzw. die zugehörigen Führungselemente an den jeweiligen Querstangen funktionssicher geführt.

Weiterhin ist denkbar, dass an den jeweils freien Enden der jeweiligen Drehstangen ein Motor zum Drehantreiben der jeweiligen Drehstange vorgesehen ist. Beim Breitenverstellen der einzelnen Transportschienen bewegen sich dann die Motoren zusammen mit der jeweiligen Transportschiene mit. Insgesamt kann dadurch eine kompakte Bauweise erreicht werden.

Ferner ist vorteilhaft, wenn antreibbare Transportketten vorgesehen sind, an denen vorzugsweise die Ränder des Lötguts und des Transports entlang der Transportrichtung zum Aufliegen kommen, wobei die Transportketten wenigstens abschnittsweise innerhalb der Transportschienen verlaufen. Die Transportschienen können dazu beispielsweise als Profilelemente ausgebildet sein.

Die eingangs genannte Aufgabe wird auch gelöst durch eine Lötanlage, insbesondere eine Reflow-Lötanlage oder eine Trocknungsanlage, in der Lötgut entlang einer Transportrichtung transportierbar ist, wobei eine derartige Lötanlage ein erfindungsgemäßes Transportsystem vorsieht.

Weitere Einzelheiten der Erfindung sind der nachfolgenden Beschreibung zu entnehmen, anhand der ein Ausführungsbeispiel der Erfindung näher beschrieben und erläutert ist.

Es zeigen:
- Figur 1: eine Reflowlötanlage in Seitenansicht;
- Figur 2: die Reflowlötanlage gemäß Figur 1 in Vorderansicht;
- Figur 3: einen Ausschnitt eines Transportsystems der Lötanlage gemäß Figur 1 und Figur 2;
- Figur 4: einen vergrößerten Ausschnitt IV aus Figur 3;
- Figur 5: einen vergrößerten Ausschnitt V aus Figur 3;
- Figur 6: eine andere perspektivische Ansicht gemäß Figur 5;
- Figur 7: einen vergrößerten Ausschnitt VII aus Figur 3;
- Figur 8: eine andere perspektivische Ansicht gemäß Figur 7;
- Figur 9: eine perspektivische Ansicht des in Figur 7 und 8 gezeigten Koppelelements;
- Figur 10: eine andere perspektivische Ansicht des Koppelelements gemäß Figur 9;
- Figur 11: die Draufsicht auf das Koppelelement gemäß Figur 9 und 10;
- Figur 12: einen dem Ausschnitt gemäß Figur 7 und 8 entsprechenden Ansicht einer Ausführungsform mit einem anderen Koppelelement; und
- Figur 13: der in Figur 12 gezeigte Ausschnitt in einer anderen perspektivischen Ansicht.

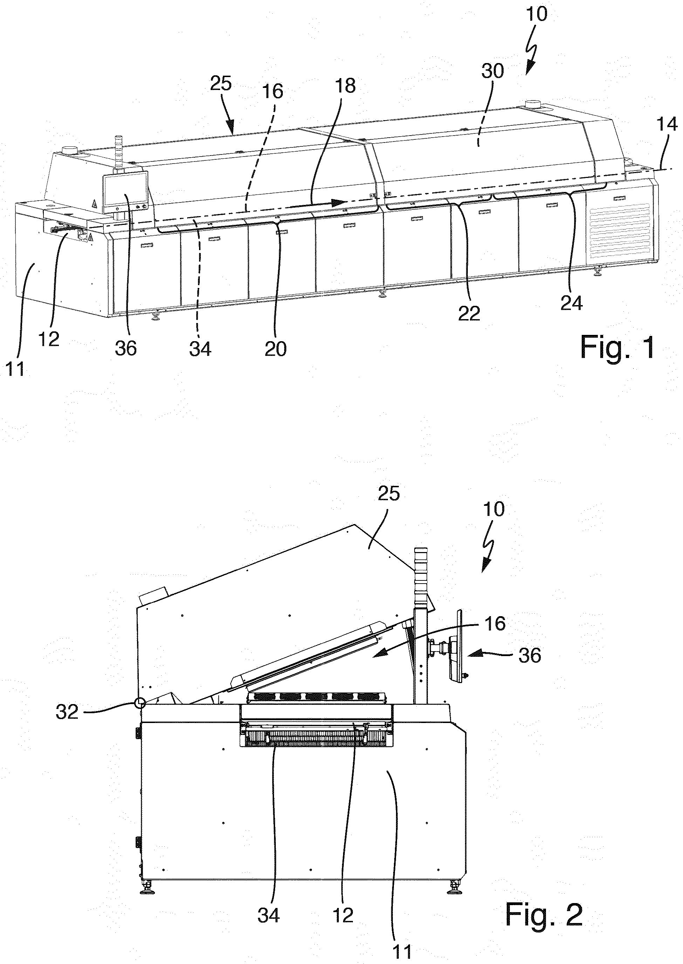

In der Figur 1 ist eine Reflowlötanlage 10 zum Durchlauflöten von Lötgut dargestellt. Die Reflowlötanlage 10 weist einen Eingang 12 und einen Ausgang 14 auf, wobei das zu lötende Lötgut über den Eingang 12 in die Reflowlötanlage 10 gelangt und über den Ausgang 14 aus der Reflowlötanlage 10 abgeführt wird. Das Lötgut wird entlang einer Transportrichtung 18 durch einen in Figur 1 angedeuteten Prozesskanals 16 transportiert. Im Prozesskanal 16 ist eine Vorheizzone 20, eine Lötzone 22 und eine Kühlzone 24 vorgesehen.

Wie aus den Figuren 1 und 2 deutlich wird, ist eine Kommunikationseinheit 36 mit einem Bildschirm und einer Eingabeeinrichtung vorgesehen, mittels welcher mit einer Maschinensteuerung der Reflowlötanlage 10 kommuniziert werden kann.

Das Lötgut, also die mit Lotpaste versehene und mit elektronischen Bauteilen bestückte Leiterplatte, wird zunächst in der Vorheizzone 20 aufgeheizt, auf eine Temperatur, die unterhalb der Schmelztemperatur der Lotpaste liegt. In der Lötzone 22 wird die Leiterplatte für eine bestimmte Dauer auf eine Prozesstemperatur erwärmt, welche oberhalb des Schmelzpunktes der Lotpaste liegt, so dass diese in der Lötzone schmilzt, um die elektronischen Bauteile mit der Leiterplatte zu verlöten. In der Kühlzone 24 wird das Lötgut abgekühlt, so dass das flüssige Lot erstarrt, bevor das Lötgut am Ausgang 14 der Reflowlötanlage 10 entnommen wird.

Zum Transportieren der Leiterplatten entlang der Transportrichtung 18 ist innerhalb der Reflowlötanlage 10 ein Transportsystem 34 vorgesehen.

Wie ferner aus Figur 2 deutlich wird, weist die Reflowlötanlage 10 einen Grundkörper 11 und eine Abdeckhaube 25 auf. Die Abdeckhaube 25 kann um eine sich parallel zur Transportrichtung 18 erstreckende Haubenachse 32 aufgeschwenkt werden. Durch Aufschwenken der Abdeckhaube 25 wird das Innere des Prozesskanals 16 und das Transportsystem 34 zugänglich, um diese optisch zu kontrollieren, zu warten, zu reinigen, einzurichten, auszutauschen und gegebenenfalls zu reparieren.

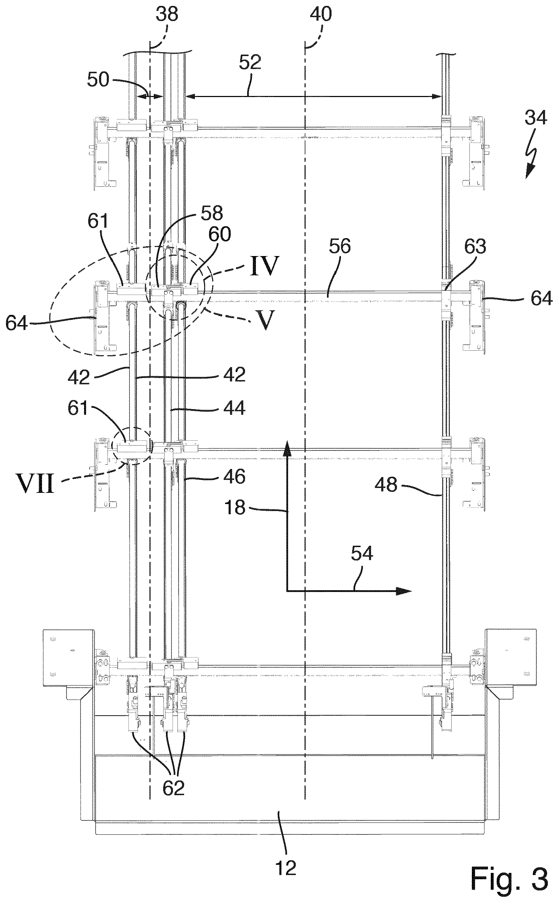

In der Figur 3 ist ein Ausschnitt des Transportsystems 34 in Draufsicht gezeigt. Das Transportsystem 34 umfasst zwei parallel zueinander, in Transportrichtung 18 verlaufende Transportspuren 38 und 40. Die beiden Transportspuren 38 und 40 werden jeweils von zwei Transportschienen 42, 44 sowie 46, 48 begrenzt. Dabei wäre denkbar, dass zwischen den Transportschienen 42, 44 sowie 46, 48 jeweils eine Mittenunterstützung mit einer weiteren Transportschiene zur Unterstützung des Lötguts im mittleren Bereich vorgesehen ist.

Zur Verstellung der Breite 50 der Transportspur 38 bzw. der Breite 52 der Transportspur 40 sind die benachbarten Transportschienen 44 und 46 der beiden Transportspuren 38 und 40 in Querrichtung 54 verstellbar. Ferner ist die Transportschiene 42 in Querrichtung 54 verstellbar. Die Transportschiene 48 ist bei der gezeigten Ausführungsform in Querrichtung 54 nicht verstellbar. Bei der in der Figur 3 gezeigten Einstellung des Transportsystems 34 ist die Spur 40 mit der Breite 52 vergleichsweise breit eingestellt und die Spur 38 mit der Breite 50 vergleichsweise schmal eingestellt.

Wie aus der Figur 3 deutlich wird, sind in Querrichtung 54 verlaufende Querstangen 56 vorgesehen, welche insbesondere zur Führung und Halterung der in Querrichtung 54 verstellbaren Transportschienen 42, 44, 46 vorgesehen sind.

Zur Verstellung der mittleren Transportschienen 44 und 46 sind an den Transportschienen 44 und 46 jeweils mehrere Koppelelemente 72 vorgesehen, die jeweils Führungselemente 58 und 60 umfassen. Auch die Transportschiene 42 sieht Koppelelemente 72 mit Führungselementen 61 vor. Die Führungselemente 58, 60, 61 liegen zur Führung der Transportschienen 42, 44, 46 mit ihrer Unterseite auf der Oberseite der jeweiligen Querstangen 56 auf. Wie aus Figur 3 deutlich wird, sind die in Querrichtung 54 benachbarten Führungselemente 58, 60 und 61 unterschiedlicher Transportschienen 44, 46 jeweils an derselben Querstange 56 in Querrichtung 54 verlagerbar. Die freien Enden der Querstangen 56 sind jeweils mit Stützen 64 ortsfest innerhalb der Lötanlage 10 fixiert.

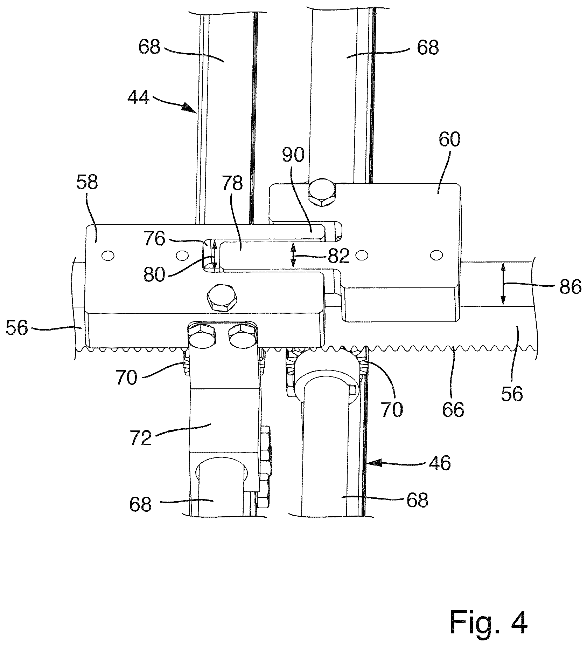

Wie aus den Figur 4, 5 und 6 deutlich wird, weisen die Querstangen 56 auf ihrer unteren, den Transportschienen 42, 44, 46 zugewandten Seite, jeweils eine Verzahnung 66 auf. Die Oberseite der Querstangen 56 ist flach ausgebildet, so dass die Führungselemente 58, 60 und 61 darauf gleitend geführt werden können.

Dabei sind zwischen den Transportschienen 42, 44, 46 und den Querstangen 56 parallel zu den Transportschienen 42, 44, 46 verlaufende, drehantreibbare Drehstangen 68 vorgesehen. An den Drehstangen 68 sind jeweils mehrere identische Zahnräder 70 vorgesehen, die die Verzahnungen 66 der Querstangen 56 kämmen.

Die Koppelelemente 72 sind an den Transportschienen 42, 44, 46 befestigt und umfassen jeweils das Führungselement 58, 60 und 61 sowie eine Drehaufnahme 74 zur drehbaren Aufnahme der jeweiligen Drehstange 68.

Wie aus Figur 3 deutlich wird, sind an den freien Enden der Drehstangen 68 im Bereich des Eingangs 12 Motoren 62 vorgesehen, mit denen die Drehstangen 68 drehangetrieben werden können. Die Anordnung ist derart, dass durch Verdrehen der Drehstangen 68 bzw. der Zahnräder 70 die Transportschienen 42, 44, 46 an den Querstange 56 geführt in Querrichtung 54 aufeinander zu oder voneinander weg verstellt werden können. Demgegenüber ist die Transportschiene 48 ist an den Querstange 56 mittels mehreren Klemmelementen 63 klemmend befestigt.

Um zu erreichen, dass die beiden mittleren Transportschienen 44, 46 maximal aufeinander zu bewegt werden können, ohne dass eine Aufeinander-zu-Bewegung der Transportschienen 44, 46 aufgrund der Führungselemente 58 behindert wird, weisen die Führungselemente 58, 60 der beiden mittleren Transportschienen 44 und 46 eine spezielle Ausbildung auf.

Wie aus den Figuren 4, 5 und 6 deutlich wird, weisen die Führungselement 58 eine sich in Querrichtung 54 erstreckende Aussparung 76 auf, die jeweils so ausgebildet ist, dass ein am jeweils zugehörigen Führungselement 60, sich ebenfalls in Querrichtung 54 erstreckender Vorsprung 78, in die jeweilige Ausnehmung 76 eingreifen kann.

In der Figur 4 ist gezeigt, wie der Vorsprung 78 in die Aussparung 76 eingreift. Der Vorsprung 78 ist komplementär zur Aussparung 76 ausgebildet. Aufgrund des Vorsehens der Aussparung 76 bzw. des Vorsprungs 78 können die beiden benachbarten Transportschienen 44, 46 maximal aufeinander zu bewegt werden, wobei dennoch eine sichere Führung der Transportschienen 44, 46 durch die Führungselemente 58, 60 an der jeweiligen Querstange 56 gewährleistet ist.

Sowohl die Aussparung 76 als auch der Vorsprung 78 sind so ausgebildet, dass sie eine in Transportrichtung aufweisende Breite 80, 82 aufweisen, die jeweils kleiner ist als die sich in Transportrichtung 18 erstreckende Breite 86 der Querstangen 56.

Wie aus insbesondere Figur 4 deutlich wird, ist auch denkbar, dass wenigstens eines der Führungselemente 60 nicht nur einen Vorsprung 78, sondern auch zugleich eine Aussparung 88 für einen am anderen Führungselement 58 vorgesehenen Vorsprung 90 aufweist. Wichtig ist, dass die Ausbildung derart ist, dass die benachbarten Transportschienen 44, 46 unterschiedlicher Transportspuren 38, 40 ohne Behinderung durch die Führungselemente 58, 60 maximal aufeinander zu bewegt werden können, und zwar so dass dadurch die Führung der Transportstangen 44, 46 durch die Führungselemente 58, 60 nicht nachteilig beeinflusst wird.

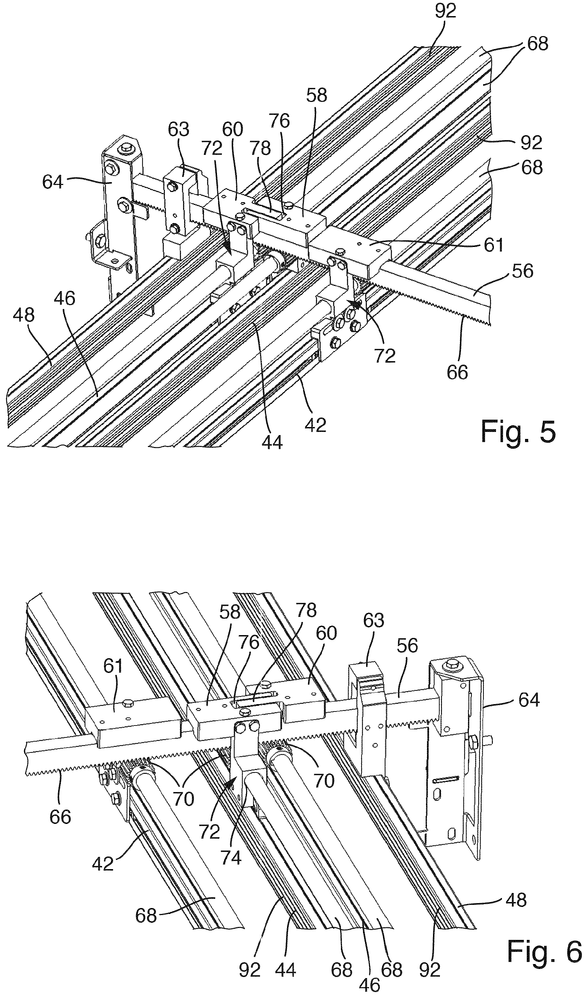

Wie insbesondere aus Figur 5 und 6 deutlich wird, sind die Führungselemente 61 der einen äußeren Transportschiene 42 quaderförmig ausgebildet.

Aus Figur 5 und 6 ist zu erkennen, dass die Transportschienen 42, 44, 46 und 48 als Halbprofile 92 ausgebildet sind, in denen antreibbare Transportketten vorgesehen sind, auf welche die freien Kanten des Lötguts zum Transport durch die Lötanlage 10 aufgelegt werden können.

Insbesondere vor der Inbetriebnahme des Transportsystems 34 ist es erforderlich, die einzelnen Transportschienen 42, 46, 44, 48 exakt in Transportrichtung bzw. parallel zueinander auszurichten. Die äußere, nicht über die Drehstangen 68 verstellbare Transportschiene 48 kann über ihre Länge mittels den Klemmelementen 63 ausgerichtet werden. Die Klemmelemente 63 können an den Querstangen 56 in Querrichtung 54 verstellt und letztlich festgesetzt werden.

Ein derartiges Einstellen der in Querrichtung 54 verstellbaren Schienen 42, 44, 46 ist aufgrund des Vorsehens der Drehstangen 68 und der Zahnräder 72, die die Querstangen 66 kämmen, nicht ohne weiteres möglich. Um diese Transportschienen 42, 44, 46 dennoch in Transportrichtung exakt parallel ausrichten zu können, ist vorgesehen, dass die Koppelelemente 72 jeweils ein Führungsteil 100, an welchem das jeweilige Führungselement 58, 60, 61 befestigt ist, und ein Befestigungsteil 102 aufweisen, welches an der jeweiligen Transportschiene 42, 44, 46 befestigt ist, derart aufweisen, dass das jeweilige Befestigungsteil 102 gegenüber dem zugehörigen Führungsteil 100 in Querrichtung 54 verstellbar und fixierbar ausgebildet ist. Durch eine Verstellung des Befestigungsteils 102 gegenüber dem Führungsteil 100 in Querrichtung 54 kann folglich die jeweilige Transportschiene 42, 44, 46 in Transportrichtung 54 ausgerichtet werden.

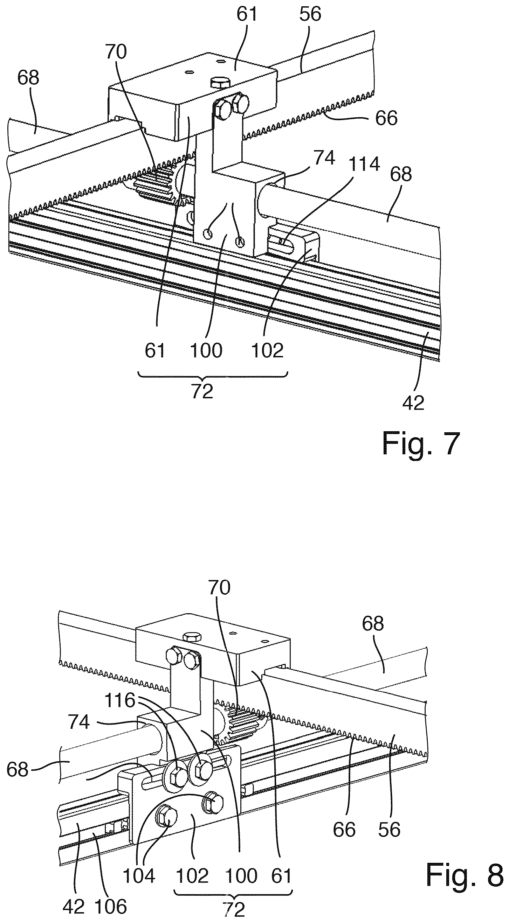

In Figur 7 und Figur 8, die jeweils die Transportschiene 42 in Alleinstellung mit dem zugehörigen Kopplungselement 72 zeigen, wird deutlich, dass die Kopplungselemente 72 aus dem an der Transportschiene42 befestigten Befestigungsteil 102 und dem Führungsteil 100 gebildet werden, wobei am jeweiligen Führungsteil 100 das zugehörige Führungselement 61 angeordnet ist.

Die Kopplungselemente 72, die an den Transportschienen 44 und 46 vorgesehen sind, weisen einen entsprechenden, zumindest zweiteiligen Aufbau mit jeweils einem Befestigungsteil 102 und einem Führungsteil 100 auf, wie die in Figur 7 und 8 gezeigten Kopplungselemente 72.

Die Befestigungsteile 102 sind, wie insbesondere aus Figur 7 deutlich wird, an der jeweiligen Transportschiene 42, 44, 46 in Transportrichtung 18 axial verstellbar. Zur Befestigung sind Befestigungsschrauben 104 vorgesehen, welche mit Nutensteinen korrespondieren, die in einer Axialnut 106 an der jeweiligen Transportschiene 42, 44, 46 verschiebbar geführt sind. Durch Lösen der Schrauben 104 ist folglich das jeweilige Befestigungsteil 102 in Axialrichtung verschiebbar. Durch Anziehen der Schrauben 104 wird das jeweilige Befestigungsteil 102 an der jeweiligen Transportschiene 42, 44, 46 festgesetzt.

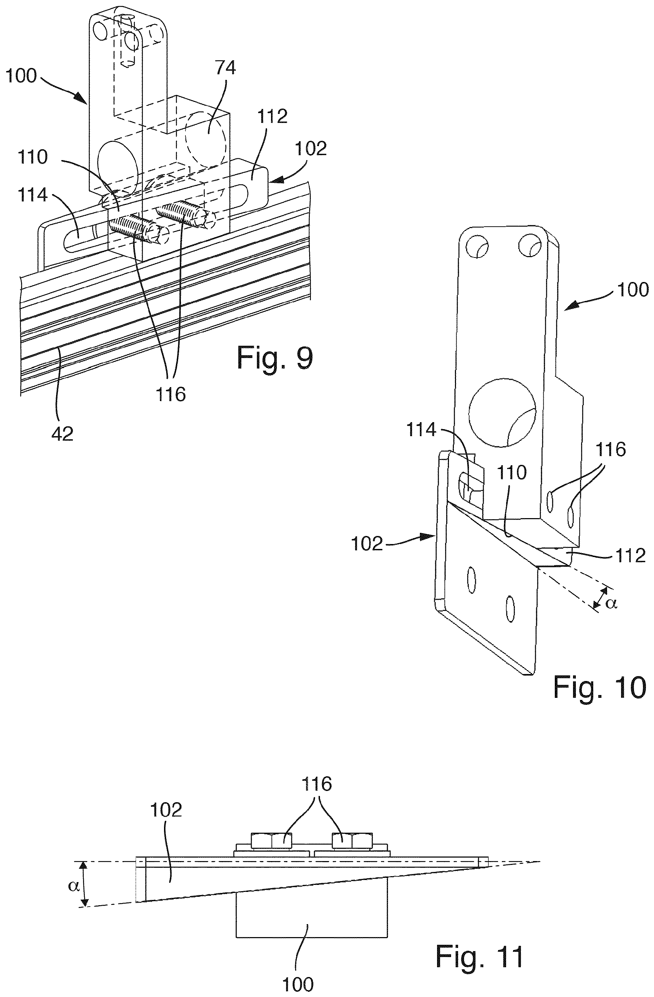

Wie insbesondere aus den Figuren 9 bis 11 deutlich wird, weist das jeweilige Befestigungsteil 102 einen Stellabschnitt 112 und das jeweilige Führungsteil 100 einen mit dem Stellabschnitt 112 zusammenwirkenden Gegenabschnitt 110 auf. Der jeweilige Stellabschnitt 112 und der zugehörige Gegenabschnitt 110 sind flächig aneinander anliegend ausgebildet und schließen mit der Transportrichtung 18, wie aus Figur 11 deutlich wird, einen spitzen Winkel α ein. Dadurch wird erreicht, dass beim Verstellen des Befestigungsteils 102 in Axialrichtung ein Auslenken der jeweiligen Transportschiene 42, 44, 46 im Bereich des jeweiligen Koppelelements 72 in Querrichtung 54 einhergeht. Die Transportschiene 42, 44, 46 wird folglich durch den keilartigen Stellabschnitt 112 bzw. Gegenabschnitt 110 beim axialen Verstellen des Befestigungsteils 102 in Querrichtung 54 weggedrückt. Dadurch, dass in Transportrichtung 18, wie aus Figur 3 deutlich wird, eine Vielzahl von Koppelelementen 72 vorgesehen sind, kann die jeweilige Transportschiene 42, 44, 46 über ihre Längserstreckung parallel zur Transportrichtung 18 ausgerichtet werden.

Bei dem in den Figuren 7 bis 11 gezeigten Ausführungsbeispiel, weist der jeweilige Stellabschnitt 112 ein sich in Axialrichtung erstreckendes Langloch 114 auf, in welchem Fixierelemente 116 in Form von Befestigungsschrauben vorgesehen sind, mittels welchen nach Einstellung des jeweiligen Befestigungsteils 102 in Axialrichtung das Befestigungsteil 102 am Führungsteil 100 festgesetzt werden kann. Am jeweiligen Führungsteil 100 sind Gewindebohrungen 118 vorgesehen, mittels welchen die Fixierelemente 116 in das jeweilige Führungsteil 100 einschraubbar ist.

Zur Ausrichtung der jeweiligen Transportschiene 42, 44, 46 im Bereich des jeweiligen Koppelelements 72 wird folglich zunächst das Befestigungsteil 102 in axialer Richtung verschoben, um die jeweilige Transportschiene 42, 44, 46 in Querrichtung 54 einzustellen. Dabei sind die Schrauben 104 und die Fixierelemente 116 gelöst. Nachdem die jeweilige Transportschiene 42, 44, 46 im Bereich des jeweiligen Koppelelements 72 in Querrichtung 54 ausgerichtet ist, werden die Schrauben 104 und die Fixierelemente 116 zur Fixierung festgezogen.

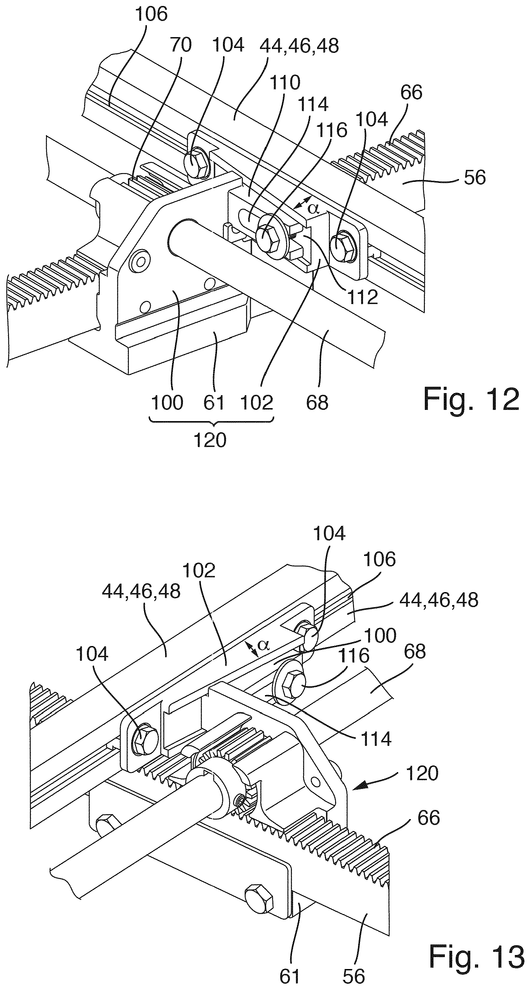

In den Figuren 12 und 13 ist eine weitere Ausführungsform gezeigt, bei der ein Koppelelement 120 gezeigt ist, welches einen unterschiedlicheren Aufbau als das Koppelelement 72 aufweist, das in den Figuren 7 bis 11 gezeigt ist. In den Figuren 12 bis 14 sind den Figuren 7 bis 11 entsprechende Bauteile mit entsprechenden Bezugszeichen gekennzeichnet.

Um die Funktionsweise des Koppelglieds 120 in den Figuren 12 und 13 besser darzustellen, zeigen diese Figuren eine Unteransicht, weshalb die Verzahnung 66 der jeweiligen Querstange 56 von oben gezeigt ist. Ferner ist die Anordnung gemäß Figur 12 und 13 derart, dass die jeweilige Drehstange 68 nicht zwischen der jeweiligen Querstange 58 und der jeweiligen Transportschiene 42, 44, 46 angeordnet ist, sondern seitlich neben der jeweiligen Transportschiene 42, 44, 46. Ferner ist das jeweilige Führungselement 61 einstückig mit dem jeweiligen Führungsteil 100 ausgebildet.

Entsprechend den Koppelelementen 72 weisen die Koppelelemente 120 neben dem Führungsteil 100 ein an der jeweiligen Transportschiene 42, 44, 46 verstellbares und mit Befestigungsschrauben 104 fixierbares Befestigungsteil 102 auf. Das Befestigungsteil 102 sieht einen Stellabschnitt 112 vor und das Führungsteil 100 sieht einen damit zusammenwirkenden Gegenabschnitt 110 vor. Anders als beim in den Figuren 7 bis 11 gezeigten Koppelelement 72 ist beim Koppelelement 120 das Langloch 114 nicht am Befestigungsteil 102, sondern am Führungsteil 100, und dort am Gegenabschnitt 110, vorgesehen. Aus den Figuren 12 und 13 ist ferner deutlich zu erkennen, dass der Stellabschnitt 112 als nutartige Führungsausnehmung ausgebildet ist, in welcher der Gegenabschnitt 110 verschiebbar angeordnet ist. Entsprechend der in den Figuren 7 bis 11 gezeigten Ausführungsform ist auch beim Koppelelement 112 ein Fixierelement 116 in Form einer Festsetzschraube vorgesehen, mit welcher der Gegenabschnitt 110 am Stellabschnitt 112 festgesetzt werden kann.

Entsprechend der Ausführungsform Figuren 7 bis 11 schließen der Stellabschnitt 112 bzw. der Gegenabschnitt 110 gemäß der Ausführungsform gemäß Figur 12 und 13 ebenfalls mit der Transportrichtung einen spitzen Winkel α ein.

Zum axialen Ausrichten der jeweiligen Transportschiene 42, 44, 46 wird, entsprechend der Ausführungsform gemäß den Figuren 7 bis 11, zunächst bei geöffneten Schrauben bzw. Fixiermitteln 104 und 116 das Befestigungsteil 102 in Axialrichtung bzw. Transportrichtung 18 so weit verstellt, so dass sich der Abstand in Querrichtung 54 zwischen der jeweiligen Transportschiene 42, 44, 46 und dem jeweiligen Führungsteil 100 bei axialer Verstellung des zugehörigen Befestigungsteils 102 ändert, und zwar so lange, bis die jeweilige Transportschiene 42, 44, 46 im Bereich des jeweiligen Koppelelements 120 in Axialrichtung ausgerichtet ist. Danach werden die Befestigungsschrauben bzw. Fixiermittel 104 und 116 festgezogen.

## Patentansprüche

1. Transportsystem (34) zum Transportieren von Lötgut durch eine Lötanlage (10),
mit wenigstens einer sich in Transportrichtung (18) erstreckenden Transportspur (38, 40),
wobei die Transportspur (38, 40) wenigstens zwei Transportschienen (42, 44, 46, 48) umfasst, wobei an wenigstens einer Transportschiene (42, 44, 46) mehrere Koppelelemente (72, 120) vorgesehen sind,
wobei die Koppelelemente (72, 120) Führungselemente (58, 60, 61) umfassen, die mit Querstangen (56), die sich in quer zur Transportrichtung (18) verlaufender Querrichtung (54) erstrecken, zusammenwirken, und
wobei die Koppelelemente (72, 120) jeweils ein das jeweilige Führungselement (58, 60, 61) aufweisendes Führungsteil (100) und ein an der jeweiligen Transportschiene (42, 44, 46) befestigtes Befestigungsteil (102) umfassen,
**dadurch gekennzeichnet,**
**dass** die Befestigungsteile (102) an der jeweiligen Transportschiene (42, 44, 46) axial verstellbar und fixierbar angeordnet sind,
**dass** die Befestigungsteile (102) jeweils einen Stellabschnitt (112) und die Führungsteile (100) jeweils einen mit dem zugehörigen Stellabschnitt (112) zusammenwirkenden Gegenabschnitt (110) aufweisen,
**dass** der Stellabschnitt (112) und/oder der Gegenabschnitt (110) mit der Transportrichtung (18) einen spitzen Winkel (α) einschließen,
**dass** das Befestigungsteil (102) gegenüber dem Führungsteil (100) verstellbar ist,
so dass sich der Abstand in Querrichtung (54) zwischen der Transportschiene (42, 44, 46) und dem jeweiligen Führungsteil (100) bei axialer Verstellung des Befestigungsteils (102) ändert.

2. Transportsystem (34) nach Anspruch 1, **dadurch**
**gekennzeichnet, dass** der jeweilige Stellabschnitt (112) wenigstens abschnittsweise flächig am jeweiligen Gegenabschnitt (110) verschiebbar geführt anliegt.

3. Transportsystem (34) nach Anspruch 2, **dadurch**
**gekennzeichnet, dass** der jeweilige Stellabschnitt (112) oder der jeweilige Gegenabschnitt (110) eine Schiebeaufnahme für den jeweiligen Gegenabschnitt (110) oder den jeweiligen Stellabschnitt (112) aufweist.

4. Transportsystem (34) nach Anspruch 1, 2 oder 3,
**dadurch gekennzeichnet, dass** der jeweilige Stellabschnitt (112) oder der jeweilige Gegenabschnitt (110) ein sich in Transportrichtung (18) erstreckendes Langloch (114) aufweist, in welchem wenigstens ein Fixierelement (116) zur Fixierung des jeweiligen Führungsteils (100) am jeweiligen Befestigungsteil (102) vorgesehen ist.

5. Transportsystem (34) nach Anspruch 4, **dadurch**
**gekennzeichnet, dass** das wenigstens eine Fixierelement (116) als Befestigungsschraube ausgebildet ist.

6. Transportsystem (34) nach einem der vorhergehenden Ansprüche, wobei zur Breitenverstellung der wenigstens einen Transportspur (38, 40) wenigsten eine der beiden Transportschienen (42, 44, 46, 48) in quer zur Transportrichtung (18) verlaufender Querrichtung (54) verstellbar ist und wobei in Querrichtung (54) benachbarte Führungselemente (58, 60, 61) in Querrichtung (54) verstellbarer Transportschienen (42, 44, 46) jeweils an derselben Querstange (56) in Querrichtung (54) aufeinander zu und voneinander weg verlagerbar geführt sind.

7. Transportsystem (34) nach Anspruch 6, **dadurch**
**gekennzeichnet, dass** parallel zu den Transportschienen (42, 44, 46, 48) verlaufende, drehantreibbare Drehstangen (68) vorgesehen sind, dass die Koppelelemente (72) jeweils eine Drehaufnahme (74) für die jeweilige Drehstange (68) aufweisen und dass die Querstangen (56) auf ihrer der jeweiligen Transportschiene (42, 44, 46, 48) zugewandten Seite eine Verzahnung (66) aufweisen, die an den jeweiligen Drehstangen (68) vorgesehene Zahnräder (70) kämmt.

8. Transportsystem (34) nach Anspruch 7, **dadurch**
**gekennzeichnet, dass** an jeweils einem freien Ende der jeweiligen Drehstange (68) ein Motor (62) zum Drehantreiben der jeweiligen Drehstange (68) vorgesehen ist.

9. Transportsystem (34) nach einem der vorhergehenden Ansprüche, **dadurch gekennzeichnet, dass** antreibbare Transportketten vorgesehen sind, die wenigstens abschnittsweise in den Transportschienen (42, 44, 46, 48) verlaufen.

10. Lötanlage (10) in der Lötgut entlang einer Transportrichtung (18) transportierbar ist, umfassend ein Transportsystem (34) nach einem der vorhergehenden Ansprüche.

## Claims

1. Transport system (34) for transporting items to be soldered through a soldering apparatus (10),
comprising at least one transport track (38, 40) extending in the transport direction (18),
the transport track (38, 40) comprising at least two transport rails (42, 44, 46, 48), a plurality of coupling elements (72, 120) being provided on at least one transport rail (42, 44, 46),
the coupling elements (72, 120) comprising guide elements (58, 60, 61) which interact with transverse rods (56) which extend in a transverse direction (54) running transversely to the transport direction (18), and the coupling elements (72, 120) each comprising a guide part (100) having the relevant guide element (58, 60, 61) and a fastening part (102) fastened to the relevant transport rail (42, 44, 46),
**characterized in that**
the fastening parts (102) are arranged on the relevant transport rail (42, 44, 46) in an axially adjustable and fixable manner,
**in that** the fastening parts (102) each have an adjustment portion (112) and the guide parts (100) each have a counter-portion (110) interacting with the associated adjustment portion (112),
**in that** the adjustment portion (112) and/or the counter-portion (110) form an acute angle (α) with the transport direction (18),
**in that** the fastening part (102) is adjustable relative to the guide part (100),
so that the distance in the transverse direction (54) between the transport rail (42, 44, 46) and the relevant guide part (100) changes upon axial adjustment of the fastening part (102).

2. Transport system (34) according to claim 1, **characterized in that** the relevant adjustment portion (112) rests in a planar manner, at least in portions, against the relevant counter-portion (110) so as to be movably guided.

3. Transport system (34) according to claim 2, **characterized in that** the relevant adjustment portion (112) or the relevant counter-portion (110) has a sliding receptacle for the relevant counter-portion (110) or the relevant adjustment portion (112).

4. Transport system (34) according to claim 1, 2 or 3, **characterized in that** the relevant adjustment portion (112) or the relevant counter-portion (110) has an elongate hole (114) extending in the transport direction (18), in which elongate hole at least one fixing element (116) is provided for fixing the relevant guide part (100) to the relevant fastening part (102).

5. Transport system (34) according to claim 4, **characterized in that** the at least one fixing element (116) is designed as a fastening screw.

6. Transport system (34) according to any of the preceding claims, wherein, for width adjustment of the at least one transport track (38, 40), at least one of the two transport rails (42, 44, 46, 48) is adjustable in a transverse direction (54) running transversely to the transport direction (18), and wherein guide elements (58, 60, 61) adjacent in the transverse direction (54) of transport rails (42, 44, 46) adjustable in the transverse direction (54) are each guided on the same transverse rod (56) so as to be movable toward and away from one another in the transverse direction (54).

7. Transport system (34) according to claim 6, **characterized in that** rotatably drivable rotary rods (68) running parallel to the transport rails (42, 44, 46, 48) are provided, **in that** the coupling elements (72) each have a rotary receptacle (74) for the relevant rotary rod (68), **and in that** the transverse rods (56) have a toothing (66) on their side facing the relevant transport rail (42, 44, 46, 48), which toothing meshes with gear wheels (70) provided on the respective rotary rods (68).

8. Transport system (34) according to claim 7, **characterized in that** a motor (62) for rotatably driving the relevant rotary rod (68) is provided on a free end of the relevant rotary rod (68) in each case.

9. Transport system (34) according to any of the preceding claims,
**characterized in that** drivable transport chains are provided which run at least in portions in the transport rails (42, 44, 46, 48).

10. Soldering apparatus (10) in which items to be soldered can be transported along a transport direction (18), comprising a transport system (34) according to any of the preceding claims.

## Revendications

1. Système de transport (34) pour transporter un produit à braser à travers une installation de brasage (10), avec au moins une voie de transport (38, 40) s'étendant dans la direction de transport (18), dans lequel la voie de transport (38, 40) comprend au moins deux rails de transport (42, 44, 46, 48), dans lequel plusieurs éléments d'accouplement (72, 120) sont prévus sur au moins un rail de transport (42, 44, 46), dans lequel les éléments d'accouplement (72, 120) comprennent des éléments de guidage (58, 60, 61) qui coopèrent avec des barres transversales (56) qui s'étendent dans une direction transversale (54) s'étendant perpendiculairement à la direction de transport (18), et dans lequel les éléments d'accouplement (72, 120) comprennent chacun une pièce de guidage (100) présentant l'élément de guidage (58, 60, 61) respectif et une pièce d'attache (102) attachée au rail de transport (42, 44, 46) respectif, **caractérisé en ce**
**que** les pièces d'attache (102) sont disposées de manière à pouvoir être ajustées axialement et fixées sur le rail de transport (42, 44, 46) respectif,
**que** les pièces d'attache (102) présentent chacune une partie de réglage (112) et les pièces de guidage (100) chacune une contre-partie (110) coopérant avec la partie de réglage (112) correspondante, que la partie de réglage (112) et/ou la contre-partie (110) forment un angle aigu (α) avec la direction de transport (18),
**que** la pièce d'attache (102) peut être ajustée par rapport à la pièce de guidage (100), de sorte que la distance dans la direction transversale (54) entre le rail de transport (42, 44, 46) et la pièce de guidage (100) respective change lors de l'ajustement axial de la pièce d'attache (102).

2. Système de transport (34) selon la revendication 1, **caractérisé en ce que** la partie de réglage (112) respective s'applique de manière guidée et déplaçable au moins sur certaines parties à plat sur la contre-partie (110) respective.

3. Système de transport (34) selon la revendication 2, **caractérisé en ce que** la partie de réglage (112) respective ou la contre-partie (110) respective présente un logement coulissant pour la contre-partie (110) respective ou la partie de réglage (112) respective.

4. Système de transport (34) selon la revendication 1, 2 ou 3, **caractérisé en ce que** la partie de réglage (112) respective ou la contre-partie (110) respective présente un trou oblong (114) s'étendant dans la direction de transport (18), dans lequel au moins un élément de fixation (116) est prévu pour la fixation de la pièce de guidage (100) respective sur la pièce d'attache (102) respective.

5. Système de transport (34) selon la revendication 4, **caractérisé en ce que** l'au moins un élément de fixation (116) est réalisé comme une vis de fixation.

6. Système de transport (34) selon l'une quelconque des revendications précédentes, dans lequel, pour l'ajustement en largeur de l'au moins une voie de transport (38, 40), au moins l'un des deux rails de transport (42, 44, 46, 48) peut être ajusté dans une direction transversale (54) s'étendant perpendiculairement à la direction de transport (18) et dans lequel dans la direction transversale (54), des éléments de guidage (58, 60, 61) adjacents de rails de transport (42, 44, 46) pouvant être ajustés dans la direction transversale (54) sont guidés de manière à pouvoir se rapprocher l'un de l'autre et à s'éloigner l'un de l'autre respectivement sur la même barre transversale (56) dans la direction transversale (54).

7. Système de transport (34) selon la revendication 6, **caractérisé en ce que** des tiges rotatives (68) pouvant être entraînées en rotation, s'étendant parallèlement aux rails de transport (42, 44, 46, 48), sont prévues, que les éléments d'accouplement (72) présentent chacun un logement rotatif (74) pour la tige rotative (68) respective et que les barres transversales (56) présentent, sur leur face tournée vers le rail de transport (42, 44, 46, 48) respectif, une denture (66) qui s'engrène avec les roues dentées (70) prévues sur les tiges rotatives (68) respectives.

8. Système de transport (34) selon la revendication 7, **caractérisé en ce qu'**un moteur (62) pour entraîner en rotation la tige rotative (68) respective est prévu à respectivement une extrémité libre de la tige rotative (68) respective.

9. Système de transport (34) selon l'une quelconque des revendications précédentes, **caractérisé en ce que** des chaînes de transport pouvant être entraînées sont prévues, qui s'étendent au moins sur certaines parties dans les rails de transport (42, 44, 46, 48).

10. Installation de brasage (10) dans laquelle un produit à braser peut être transporté le long d'une direction de transport (18), comprenant un système de transport (34) selon l'une quelconque des revendications précédentes.
